# EUROPEAN PATENT SPECIFICATION

(11) **EP 4 567 336 B1**
(45) Date of publication and mention of the grant of the patent: **15.07.2026**
(21) Application number: 23214622.5
(22) Date of filing: 06.12.2023
(51) Int. Cl.: F24F 8/158, B01D 1/00, F24F 12/00

(54) **A DECENTRALIZED VENTILATION SYSTEM, METHOD OF USING THE SAME AND USE**
DEZENTRALISIERTES BELÜFTUNGSSYSTEM, VERFAHREN ZUR VERWENDUNG DAVON UND VERWENDUNG
SYSTÈME DE VENTILATION DÉCENTRALISÉ, SON PROCÉDÉ D'UTILISATION ET UTILISATION

(43) Date of publication of application: 11.06.2025
(73) Proprietor: MANN+HUMMEL LIFE SCIENCES & ENVIRONMENT HOLDING SINGAPORE PTE. LTD., Singapore 139234 (SG)
(72) Inventor: FORBERG, Daniel, 71636 Ludwigsburg (DE)
(74) Representative: Mann + Hummel Intellectual Property

(56) References cited:
- CN-A- 105 737 290
- CN-A- 113 091 185
- CN-A- 114 110 821

## Description

### Technical Field

The invention relates to a decentralized ventilation system, including a honeycomb module, to a method of using the decentralized ventilation system and to the use of a honeycomb module including a flow-through honeycomb molecular filter and a heat recovery honeycomb.

### Background Art

Conventional decentralized ventilation systems are commonly used in residential buildings, commercial spaces, and offices where different areas may have varying occupancy levels and ventilation requirements. These systems can offer a balance between flexibility, and localized comfort. However, shortcomings encountered with conventional decentralized ventilation systems involve insufficient energy efficiency. Insufficient energy efficiency can have negative consequences, impacting both the environment and economic factors such as higher costs. For example, inefficient use of energy often leads to higher consumption of fossil fuels, which are a major source of greenhouse gas emissions. Burning fossil fuels releases carbon dioxide (CO₂) and other pollutants into the atmosphere, contributing to climate change and air pollution. Inefficient use of energy also often results in higher energy bills for both businesses and consumers. This increased cost of energy can impact the affordability of goods and services, reduce disposable income, and affect the competitiveness of businesses. CN105737290 A discloses an apparatus having a purification module and a heat exchanger module. The purification module includes a cylinder with a pre-filter to filter out larger particles and a disc-shaped filter provided therein. CN113091185 A discloses a ventilation purification device comprising a filter box at one end and a pipe at the other end. The pipe is provided with a heat exchanger. The filter box may include an activated carbon filter. CN114110821 A discloses a central air conditioning system having a filter assembly provided at an air inlet. The filter assembly includes several meshes installed in an installation pipe. The central air conditioning system further comprises a heat exchange assembly disposed within a temperature regulating cavity.

A further disadvantage of conventional decentralized ventilation systems is poor filter performance of the filter module. The filter may, for example, be inefficient in removing a sufficient amount of contaminants from the air, or cause an uncomfortable noise level, which may irritate the user.

It is therefore an object of the present invention to provide an improved decentralized ventilation system and an improved method of using the decentralized ventilation system, as well as an improved use of a filter module.

### Summary

According to a first aspect of the present invention, there is provided a decentralized ventilation system as defined in claim 1.

According to various embodiments, the flow-through honeycomb molecular filter includes activated carbon, optionally in combination with clay (e.g., cordierite, bentonite).

According to various embodiments, the flow-through honeycomb molecular filter includes a homogenous composition of activated carbon and a support material (e.g., clay).

According to various embodiments, the flow-through honeycomb molecular filter includes a support material (e.g., clay or any other rigid structure, such as metal, plastic, paper etc.) coated with activated carbon.

According to various embodiments, the flow-through honeycomb molecular filter is impregnated, optionally with a substance that is configured for chemisorption, optionally wherein the substance is an adsorbent is selected from the group consisting of inorganic or organic acids and bases, metal oxides, metal amines, metal amides, metal particles, metal salts, metal sulfides, organic substances like tris(hydroxymethyl)aminomethane, urea and combinations thereof. More particular, the adsorbent is selected from the group consisting of KI, K₂CO₃, tris(hydroxymethyl)aminomethane, KOH, Cu(OAc)₂, H₃PO₄, citric acid, and a combination thereof.

According to various embodiments, the flow-through honeycomb molecular filter is formed monolithically (e.g., in one piece).

According to various embodiments, the flow-through honeycomb molecular filter is closer to the first air outlet than the heat recovery honeycomb.

According to various embodiments, the heat recovery honeycomb is closer to the first air outlet than the flow-through honeycomb molecular filter.

According to various embodiments, the decentralized ventilation system further includes a particulate filter positioned between the blower and the honeycomb module. Alternatively or additionally, the particulate filter may be positioned between the honeycomb module and the second air outlet.

According to various embodiments, the decentralized ventilation system further includes a switch configured for activating the decentralized ventilation system.

In another aspect of the present invention, there is provided a method of using the decentralized ventilation system as defined in claim 10. The method may include an alternating cycling between an air exhaust cycle and an air supply cycle.

In the air exhaust cycle, the method may include a step of drawing interior air through the first air outlet into the honeycomb module. The method may further include a step of equilibrating the temperature of the air that is drawn into the honeycomb module to be nearer or at the temperature of the heat recovery honeycomb of the honeycomb module. The method may further include a step of purifying the air that is drawn into the honeycomb module in the flow-through honeycomb molecular filter. The method may further include a step of expelling purified and temperature-equilibrated air through the second air outlet. In the air exhaust cycle, temperature equilibration and purification are interchangeable.

In the air supply cycle, the method may include a step of drawing exterior air through the second air outlet into the honeycomb module. The method may further include a step of equilibrating the temperature of the air that is drawn into the honeycomb module to be nearer or at the temperature of the heat recovery honeycomb of the honeycomb module. The method may further include a step of purifying the air that is drawn into the honeycomb module in the flow-through honeycomb molecular filter. The method may further include a step of expelling purified and temperature-equilibrated air through the first air outlet. In the air supply cycle, temperature equilibration and purification are interchangeable.

According to various embodiments, the method includes activating the decentralized ventilation system, wherein the activation is carried out manually, via remote controller, via Wifi, via motion detector, via timer, via oxygen sensor, via carbon dioxide sensor, or a combination thereof.

According to various embodiments, the method includes regenerating the flow-through honeycomb molecular filter, optionally by removing the flow-through honeycomb molecular filter from the decentralized ventilation system, further optionally by heating the removed flow-through honeycomb molecular filter to a temperature, optionally wherein the temperature is between about 150 °C and about 200 °C.

In another aspect of the present invention, there is provided the use of a honeycomb module including a flow-through honeycomb molecular filter and a heat recovery honeycomb in a decentralized ventilation system. Optionally, the decentralized ventilation system may include all of the components of the first aspect. Optionally, the use of the honeycomb module in the decentralized ventilation system may involve all of the method steps of the second aspect.

According to a further embodiment, the use includes thermally regenerating the flow-through honeycomb molecular filter, by removing the flow-through honeycomb molecular filter from the decentralized ventilation system and by heating the flow-through honeycomb molecular filter to a temperature, optionally wherein the temperature is between about 150 °C and about 200 °C.

### Brief Description of Drawings

The drawings show embodiments of the invention and details thereof:
- FIG. 1A: is a side view of a decentralized ventilation system according to various embodiments.
- FIG. 1B: is a schematic view of an air flow through a flow-through honeycomb molecular filter according to various embodiments.
- FIG. 2: is a side view of the decentralized ventilation system according to various embodiments.
- FIG. 3: is a side view of the decentralized ventilation system according to various embodiments.
- FIG. 4: is a side view of the decentralized ventilation system according to various embodiments.
- FIG. 5A: is a simplified flow diagram for an exemplary method according to various embodiments.
- FIG. 5B: is a simplified flow diagram for an exemplary method according to various embodiments.
- FIG. 5C: is a simplified flow diagram for an exemplary method according to various embodiments.
- FIG. 6: is a cross-sectional and perspective illustration in association with an Example according to various embodiments.
- FIG. 7: is a cross-sectional and perspective illustration in association with an Example according to various embodiments.

### Detailed Description

The following detailed description refers to the accompanying drawings that show, by way of illustration, specific details and embodiments in which the present invention may be practiced. These embodiments are described in sufficient detail to enable those skilled in the art to practice the invention. Other embodiments may be utilized and structural, and logical changes may be made without departing from the scope of the invention as defined by the appended claims.

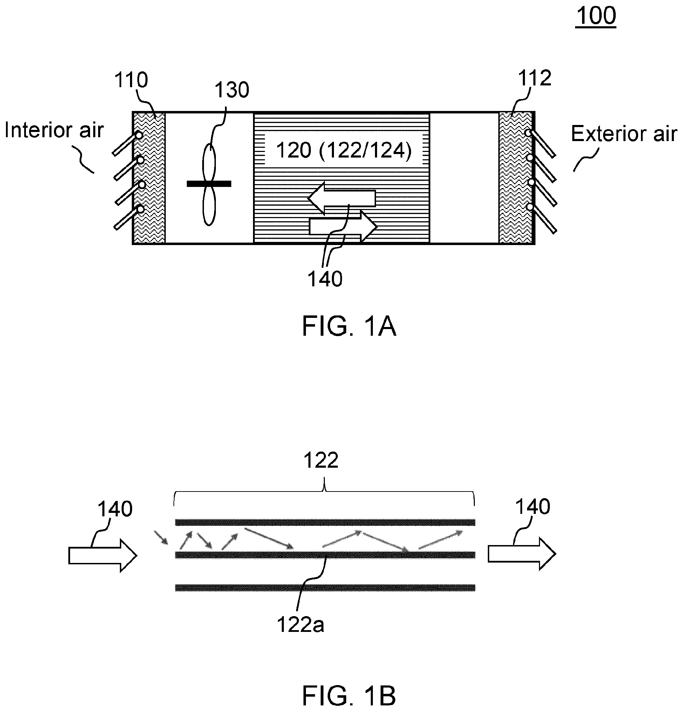

FIG. 1A shows a decentralized ventilation system 100 including a first and a second air outlet 110, 112 in a side view. The first air outlet 110 may be connected with (e.g., in contact with) the indoor environment of a building, and therefore face interior air. The second air outlet 112 may be connected with (e.g., in contact with) the outdoor environment of the building, and therefore face exterior air. The building is understood to include residential buildings, commercial spaces, and offices, but is not limited to these. It is also understood, that the indoor environment is separated from the outdoor environment (e.g., by a wall), and therefore the interior air is different from the exterior air, in terms of air quality and temperature. In terms of air quality, it is desired to (partially) replace the interior air with the exterior air, since the interior air typically has a lower oxygen content (and higher carbon dioxide content) than the exterior air. During this replacement, and in terms of temperature, it is generally desired to retain the temperature of the indoor environment, since the exterior air is often too cold or too hot. For exchanging the air, there may be provided an air passage between the first and the second air outlets 110, 112. In an air exhaust cycle, the interior air is configured to pass through the decentralized ventilation system 100 and toward the outdoor environment, while in an air supply cycle, the exterior air is configured to pass through the decentralized ventilation system 100 and towards the indoor environment.

In this air passage may be disposed a honeycomb module 120, comprising two components, wherein one component is a flow-through honeycomb molecular filter 122, while the other component is a heat recovery honeycomb 124. The honeycomb module 120 may be disposed in the air passage such that no air bypasses the honeycomb module 120. The components 122, 124 may be disposed in series, meaning that the air passes the components 122, 124 sequentially, rather than synchronized. There is no particular preference as to which of the components 122, 124 is disposed on which side within the decentralized ventilation system 100. In other words, both alternatives of the flow-through honeycomb molecular filter 122 or the heat recovery honeycomb 124 being nearer to the first air outlet 110 or the second air outlet 112, respectively, are feasible. Although shown in FIG. 1A as being one element, the components 122, 124 may be two separate elements in series. The honeycomb module 120 may substantially consist of the flow-through honeycomb molecular filter 122 and the heat recovery honeycomb 124. The design of the honeycomb module 120 (in other words a cross-section of the honeycomb module 120 or the outer shape of the honeycomb module 120 as shown in FIG. 1A) is not particularly limited, but may be in a round shape, a hexagonal shape, an oval shape, a square shape, or a rectangular shape. The outer shape of the honeycomb module 120 may correspond to the air passage between the first and the second air outlets 110, 112. The honeycomb module 120 may be shaped to fit the air passage to prevent air bypass.

The honeycomb module 120 may comprise a plurality of channels. The honeycomb module 120 and the plurality of channels extend along an axis provided between the first and the second air outlets 110, 112. The plurality of channels extends from one end to the other end of the honeycomb module 120. The plurality of channels may be parallel or substantially parallel to each other. The plurality of channels is provided across the cross-section of the honeycomb module 120. In other words, an outer wall forming the outer shape of the honeycomb module 120 forms part of the walls of the outermost channels of the plurality of channels. The plurality of channels may resemble the cells of a honeycomb. The term "honeycomb" is thus used herein to refer to the structural design of the honeycomb module 120. The shape of a cross-section of each channel, or a cell of the honeycomb, is not particularly limited. Suitable cross sections may be selected from a group consisting of trigonal, tetragonal, square, pentagonal, hexagonal, octagonal, spherical, and oval cross-section. Each channel of the plurality of channels may exhibit a uniform cross section. Alternatively, it is conceivable that a channel may exhibit a cross section different from another channel. The channels are characterized by a series of closely packed, geometrically shaped cells that form a grid-like pattern. With regard to the size of these cells, each square inch of honeycomb (either of components 122 or 124) may include from about 10 to about 650 cells. In other terms, each square centimeter of honeycomb may include from about 1.5 to about 10 cells, or from about 3 to about 5 cells. Advantageously, the honeycomb structure provides a high surface area and a uniform distribution of material, making it efficient for molecular filtration. In particular, the honeycomb design enables a higher filter capacity as compared with a conventional filter material. The structured pattern additionally is beneficial for trapping airborne molecular contaminants while allowing the passage of air through the cells. In the heat recovery honeycomb 124, the honeycomb structure facilitates the efficient transfer of heat between two mediums.

The flow-through honeycomb molecular filter 122 may be adapted for filtration. "Adapted for filtration", as used herein, may refer to a material of the flow-through honeycomb molecular filter 122 including active sites that are suitable for the removal of particular components, or a mixture of components, e.g., a contaminant or an impurity, from air. For example, the flow-through honeycomb molecular filter 122 may be an air filter, and the filtration may be an air filtration. The particular components from the air that are supposed to be removed by use of the flow-through honeycomb molecular filter 122 may be odors as well as harmful contaminants, such as volatile organic compounds (VOC's), nitrogen dioxide (NO₂), sulfur dioxide (SO₂), etc.

The decentralized ventilation system 100 may further include a blower (or an aspirator) 130. The blower 130 may be configured to generate an air flow 140 through the air passage. By changing a direction of the air flow 140, the blower may be configured to alternate between the air exhaust cycle (wherein the air flow 140 has a direction from the indoor environment to the outdoor environment), and the air supply cycle (wherein the air flow 140 has a direction from the outdoor environment to the indoor environment). It follows that both first and second air outlets 110, 112 may also function as air inlets, depending on whether the air flow 140 follows the air exhaust cycle or the air supply cycle. While the blower 130 is shown in FIG. 1A as being disposed between the first air outlet 110 and the honeycomb module 120, it could also be positioned between the honeycomb module 120 and the second air outlet 120. Alternatively, the blower 130 may be placed between the flow-through honeycomb molecular filter 122 and the heat recovery honeycomb 124. This placement advantageously facilitates removing and/or replacing the flow-through honeycomb molecular filter 122 (from the indoor or outdoor environment, depending on placement of the flow-through honeycomb molecular filter 122).

As mentioned, conventional decentralized ventilation systems often have an insufficient energy efficiency, which could be due to various reasons, for example a high pressure drop during operation of the ventilation system. Such a pressure drop increases energy consumption for operation of the ventilation system. A further reason for insufficient energy usage encountered in conventional decentralized ventilation systems is a change in ambient temperature due to air exchange between an indoor environment and an outdoor environment. For example, during a warmer season, the warm air from the outdoor environment might inadvertently increase the temperature in the indoor environment, causing the user to employ additional, energy-consuming devices (for example, air-conditioning) to remove the heat that was inadvertently brought indoors along with the fresh air. *Vice versa,* during a colder season, the cold air from the outdoor environment might inadvertently decrease the temperature in the indoor environment, causing the user to employ additional, energy-consuming devices (for example, a heater) to heat the room that was inadvertently cooled down by the fresh air. This loss of ambient temperature may thus result in an increased energy consumption.

Advantageously, by using a honeycomb module 120 in the decentralized ventilation system 100, substantial energy savings can be obtained as compared with conventional decentralized ventilation system. For one reason, this is because the filter module is in the form of a "flow-through" honeycomb molecular filter 122, rather than a "wall-flow" filter. A "flow-through" filter describes a filtration element that filters out components, e.g. contaminants, from air, by directing the air flow 140 through channels formed by the walls or surfaces of the flow-through honeycomb molecular filter 122 (see, e.g., FIG. 1B). The contaminants in the air contact active sites in the walls or surfaces of the flow-through honeycomb molecular filter 122 and are removed. The air gets more purified as it advances towards the end of the channels. In contrast, a conventional "wall-flow" filter implies that the air passes across the filter or through surfaces or walls of the filter. The components are filtered by passing through the walls or surfaces of the filter. However, the operation of such a conventional "wall-flow" filter module may result in a high pressure drop, which requires more energy to retain the air flow. By providing a flow-through honeycomb molecular filter 122, the high increase of pressure drop can be avoided, which reduces the energy consumption of the decentralized ventilation system 100.

The honeycomb module 120 in the decentralized ventilation system 100 is also particularly energy-efficient for another reason, namely due to the heat recovery honeycomb 124. The heat recovery honeycomb 124 has the purpose of a heat exchanger. For example, in winter, in the air exhaust cycle, the interior air is comparably warmer than the exterior air. While the hotter, interior air is moved from the interior to the exterior, the heat is collected in the heat recovery honeycomb 124 and cooled air is expelled to the outdoor environment, thereby retaining (parts of) the heat in the heat recovery honeycomb 124. In the air supply cycle, the blower 130 changes direction to draw exterior air from the outdoor environment. The heat retained in the heat recovery honeycomb 124 from the previous air exhaust cycle is now transferred to the air that is supplied to the indoor environment, thereby saving on energy that would otherwise be required to heat the indoor environment (e.g., by using a heater). In summer, in the air supply cycle, relatively warm exterior air from the outdoor environment is moved to the indoor environment. The heat from the outdoor environment is collected in the heat recovery honeycomb 124, so that cooled air can be supplied to the indoor environment and additional cooling measures (e.g., using air-conditioning) can be reduced or avoided. In the air exhaust cycle, the blower 130 changes direction to draw cool interior air from the indoor environment, and heat that is retained in the heat recovery honeycomb 124 from the previous air supply cycle is removed from the heat recovery honeycomb 124 by the exterior air that is expelled to the outdoor environment. In summary, the heat recovery honeycomb 124 is capable of substantially retaining indoor temperatures, independent of the season, and therefore assists in reducing or avoiding energy consumption, that would otherwise be wasted for temperature control.

Further advantageously, the honeycomb module 120 in the decentralized ventilation system 100 has a particularly low noise level. This is due to the geometric design of the honeycomb design (e.g., the predetermined flow duct), which is capable of absorbing sound waves.

According to various embodiments, a material of the flow-through honeycomb molecular filter 122 may be selected from any material that is capable of adsorbing or oxidizing/converting the particular components and being formed in a honeycomb design. In some embodiments, the flow-through honeycomb molecular filter 122 may include a solid inorganic or organic, non-polymeric or polymeric porous material. Optionally, the material may be in the form of a powder. When the material is in the form of a powder, it may be mixed with a support material for being processed into the honeycomb design, or it may be coated on a support material that is formed in the honeycomb design. The support material may be any material that is sufficiently rigid to provide support. For example, the support material may be metal, plastic, paper, resin, clay (e.g., cordierite, bentonite), or a combination thereof. The support material may be shaped into the honeycomb design. For example, the support material may be extruded, folded, stacked, printed, or shaped by any other shaping method.

In various embodiments, the flow-through honeycomb molecular filter 122 may include activated carbon, optionally in combination with the support material (e.g., clay). The activated carbon may be in monolithic form or in particulate or loose form incorporated into woven or nonwoven fibres. Advantageously, by providing activated carbon as a component of the flow-through honeycomb molecular filter 122, it is possible to increase the filter capacity of the flow-through honeycomb molecular filter 122, as compared to conventional filter modules. Further advantageously, providing activated carbon in the flow-through honeycomb molecular filter 122 contributes to the heat-exchanging properties of the honeycomb module 120. Accordingly, the presence of activated carbon in the flow-through honeycomb molecular filter 122 not only contributes to the energy-saving properties of the decentralized ventilation system 100, but also enables the size of the heat recovery honeycomb 124 to be reduced, thereby saving on space and resources. The content of the activated carbon in the flow-through honeycomb molecular filter 122 may be about 30 wt% to about 80 wt%, or about 50 wt% to about 70 wt%.

In various embodiments, the activated carbon may be made from coconut shell, wood, bamboo, fruit or vegetable pits, charcoal, cellulose, or lignocellulose materials. The activated carbon may be extruded together with the support material (e.g., clay (cordierite) or resins) to form a plurality of parallel channels of the flow-through honeycomb molecular filter 122 directly as one homogenous composition. This embodiment has the advantage that it provides a particularly high filter capacity. Alternatively, the activated carbon may be coated on the support material (e.g., clay (cordierite)), that forms the honeycomb design.

In various embodiments, the flow-through honeycomb molecular filter 122 may be formed monolithically, e.g., in one piece. For example, the flow-through honeycomb molecular filter 122 may be substantially free of adhesives. Advantageously, by forming the flow-through honeycomb molecular filter 122 monolithically, optionally without the use of adhesives, a higher stability can be obtained. This may enable the flow-through honeycomb molecular filter 122 to be used in higher temperature applications, such as a regeneration process. In turn, the ability to regenerate the flow-through honeycomb molecular filter 122 (i.e., removing contaminants from the flow-through honeycomb molecular filter 122) assists in saving resources, thereby contributing to the energy efficiency of the decentralized ventilation system 100, since the production of new filter modules wastes energy and resources.

Accordingly, in various embodiments, the flow-through honeycomb molecular filter 122 may be configured to be regenerated, advantageously resulting in the above mentioned savings in energy and resources. The regeneration temperature may be from about 150 °C to about 200 °C.

In various embodiments, the flow-through honeycomb molecular filter 122 may be impregnated, optionally with a substance that is configured for chemisorption. For example, the flow-through honeycomb molecular filter 122 may be impregnated with an adsorbent. The adsorbent may include inorganic or organic acids, inorganic or organic bases, metal oxides, metal amines, metal amides, metal particles, metal salts, metal sulfides, organic substances, urea and combinations thereof. More particular, the adsorbent may be selected from the group consisting of KI, K₂CO₃, tris(hydroxymethyl)aminomethane, KOH, Cu(OAc)₂, H₃PO₄, citric acid, and combinations thereof.

In various embodiments, the decentralized ventilation system 100 may further include a switch, configured for activation or de-activation of the decentralized ventilation system 100. The switch may be operated by hand, or by remote controller. In further embodiments, the switch may be operated by Wifi. In embodiments, where the switch is controlled by Wifi, it may be possible to control more than one decentralized ventilation system in one building, such that they complement each other and cooperate. In some embodiments, the decentralized ventilation system 100 may further include a motion detector, and the decentralized ventilation system 100 is activated automatically upon detection of motion in the room. Alternatively or additionally, the decentralized ventilation system 100 may further include a timer, and the decentralized ventilation system 100 is activated automatically at a predetermined time. Alternatively or additionally, the decentralized ventilation system 100 may further include an oxygen sensor, and the decentralized ventilation system 100 is activated automatically when the oxygen concentration of the interior air falls below a predetermined oxygen concentration. Alternatively or additionally, the decentralized ventilation system 100 may further include a carbon dioxide sensor, and the decentralized ventilation system 100 is activated automatically when the carbon dioxide concentration of the interior air exceeds a predetermined carbon dioxide concentration.

FIG. 1B is a schematic drawing, illustrating the concept of the "flow-through" honeycomb molecular filter 122 in further detail. In one example, the air flow 140 enters the flow-through honeycomb molecular filter 122 from the left side and passes through the flow-through honeycomb molecular filter 122 to the right side. The air flow 140 may be turbulent in the beginning, and therefore has increased contact with walls 122a of the honeycomb cells in the flow-through honeycomb molecular filter 122. Due to this increased contact with the walls 122a, particular components (e.g., odors as well as harmful contaminants, such as volatile organic compounds (VOC's), nitrogen dioxide (NO₂), sulfur dioxide (SO₂), etc.) are removed from the air flow 140. Notably, the air does not pass through the wall 122a (in contrast to the conventional "wall-flow" filters), but merely contacts the wall 122a, which contains the active sites of the flow-through honeycomb molecular filter 122.

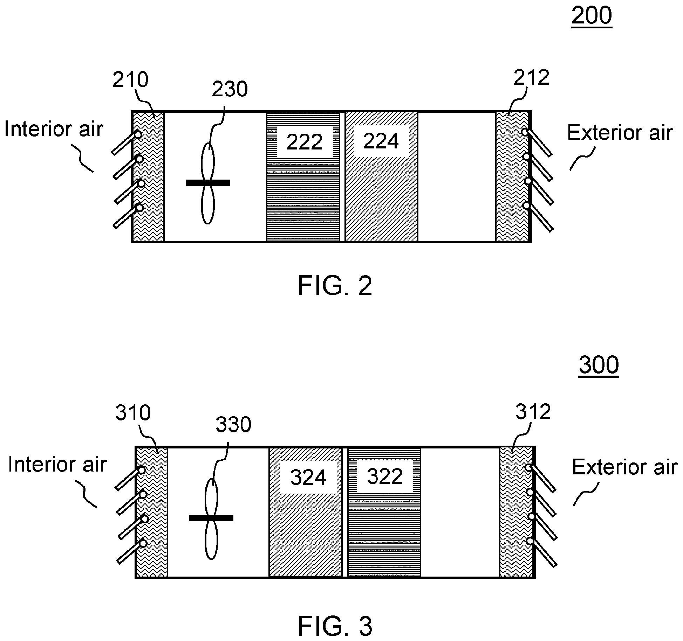

FIG. 2 and FIG. 3 show the decentralized ventilation systems 200, 300, including the flow-through honeycomb molecular filters 222, 322 and the heat recovery honeycombs 224, 324, wherein the components 222, 322 and 224, 324 are arranged in a different sequence. FIG. 2 shows the components 222, 224 in an arrangement, wherein the flow-through honeycomb molecular filter 222 is closer to the first air outlet 210 than the heat recovery honeycomb 224. Advantageously, the arrangement as shown in FIG. 2 facilitates changing or regenerating the flow-through honeycomb molecular filter 222, since this arrangement enables the flow-through honeycomb molecular filter 222 to be removed from the indoor environment. In an alternative, FIG. 3 shows the components 322, 324 in an arrangement, wherein the heat recovery honeycomb 324 is closer to the first air outlet 310 than the flow-through honeycomb molecular filter 322. Advantageously, the arrangement as shown in FIG. 3 results in an improved filtration over the arrangement shown in FIG. 2. Other components of the decentralized ventilation systems 200, 300, such as the second air outlets 212, 312 or the blowers 230, 330 are as described with reference to decentralized ventilation system 100.

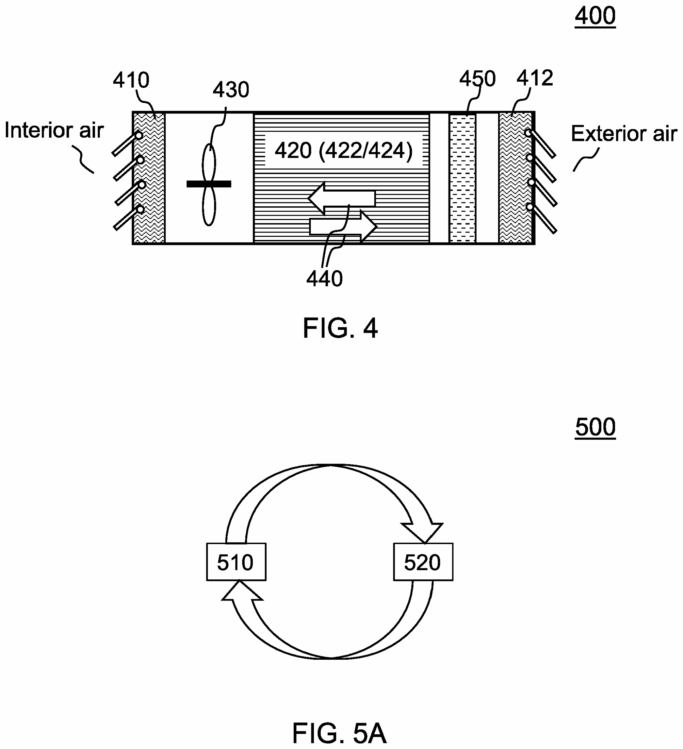

As shown in FIG. 4, the decentralized ventilation system 400 may further include a particulate filter 450. Advantageously, providing a particulate filter 450 assists the flow-through honeycomb molecular filter 422 in the filtration, and may thus increase the lifetime of the flow-through honeycomb molecular filter 422. This, in turn, has the afore mentioned advantages of saving energy and resources. While not shown in FIG. 4, the particulate filter 450 may be positioned between the blower 430 and the honeycomb module 420. Alternatively, and as shown in FIG. 4, the particulate filter 450 may be positioned between the honeycomb module 420 and the second air outlet 412. Other components of the decentralized ventilation system 400, such as the heat recovery honeycomb 324, are as described with reference to decentralized ventilation system 100.

In a second aspect, there is provided a method 500 of using the decentralized ventilation system. As shown in FIG. 5A, the method 500 may include an alternating cycling between an air exhaust cycle 510 and an air supply cycle 520. In the air exhaust cycle 510, used air (i.e., interior air) is transported from the indoor environment to the outdoor environment. In the air supply cycle 520, fresh air (i.e., exterior air) is transported from the outdoor environment to the indoor environment. The decentralized ventilation system may involve all of the elements of the decentralized ventilation system 100, 200, 300 and 400, which are not reiterated herein for brevity.

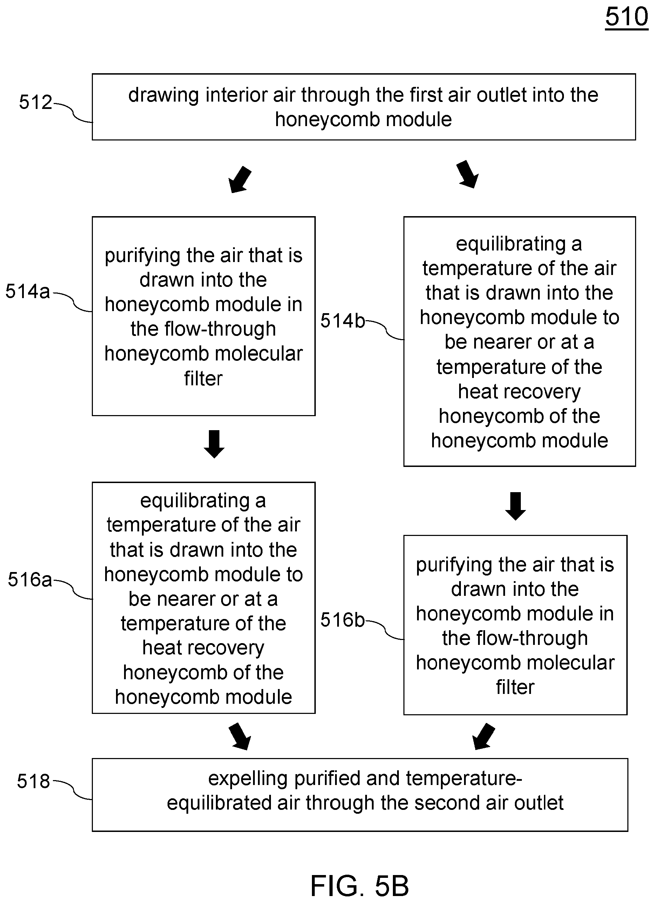

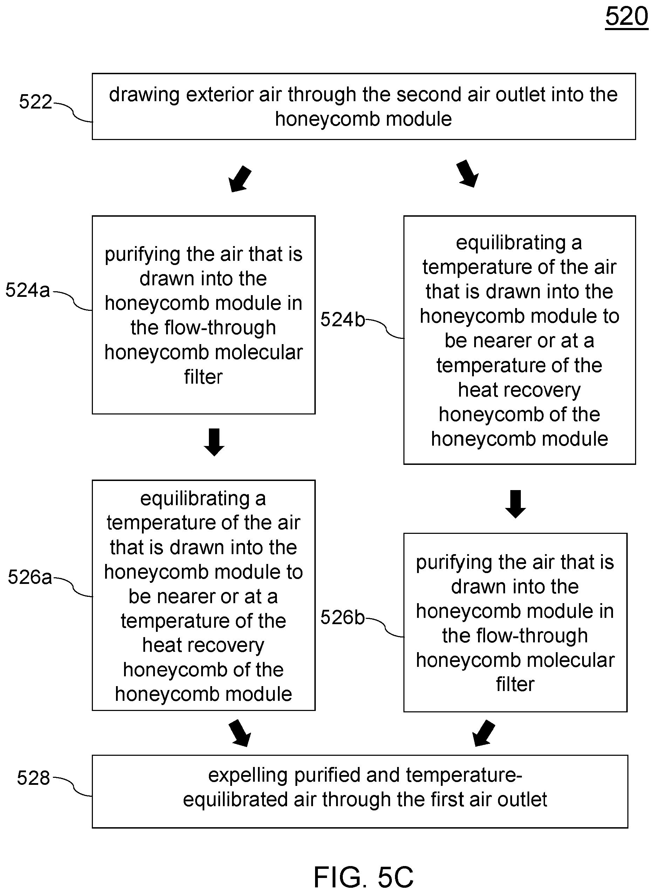

Each air exhaust cycle 510 and air supply cycle 520 progresses through several method steps, shown in FIGS. 5B and 5C. With reference to FIG. 5B, the air exhaust cycle 510 may commence with a step 512 of drawing interior air through the first air outlet into the honeycomb module. The step 512 may include that the blower is activated to generate an air flow. In the air exhaust cycle 510, the air flow may be in a direction from the first air outlet to the second air outlet. The interior air passing through the first air outlet may pass the blower and/or the particulate filter, before reaching the honeycomb module.

In the honeycomb module, there are two alternative method steps for proceeding, depending on whether the flow-through honeycomb molecular filter is positioned closer to the first air outlet than the heat recovery honeycomb (as shown in, e.g., FIG. 2) or whether the heat recovery honeycomb is closer to the first air outlet than the flow-through honeycomb molecular filter (as shown in, e.g., FIG. 3).

For the first alternative, the next method step would be step 514a, corresponding to purifying the air that is drawn into the honeycomb module in the flow-through honeycomb molecular filter. The purification of the air proceeds essentially as described in relation with FIGS. 1A and 1B and shall not be re-iterated for brevity.

Subsequently, the method step 516a may involve equilibrating the temperature of the air that is drawn into the honeycomb module. This equilibration takes place in the heat recovery honeycomb, substantially following the working principle of a heat exchanger. As a result, the temperature of the air inside the heat recovery honeycomb is brought (nearer) to the temperature of the heat recovery honeycomb of the honeycomb module. For example, in a colder outdoor environment (e.g., in winter), in the air exhaust cycle 510, the heat recovery honeycomb would be colder than the interior air and would therefore cool down the air that is drawn into the honeycomb module. In contrast, in a warmer outdoor environment (e.g., in summer), in the air exhaust cycle 510, the heat recovery honeycomb would be warmer than the interior air and would therefore warm up the air that is drawn into the honeycomb module.

For the second alternative, the two corresponding method steps would be steps 514b and 516b, which would correspond to an initial temperature-equilibration (corresponding to step 516a of the first alternative) followed by purification (corresponding to step 514a of the first alternative). The description of these steps is, apart from their order, substantially the same as described in the first alternative and shall not be re-iterated for brevity.

After the air is purified and temperature-equilibrated (independent of their order), the air is expelled to the outdoor environment through the second air outlet. It should also be noted that the temperature equilibration, either in step 516a or in step 514b, assists in equilibrating the heat recovery honeycomb, such that in the subsequent air supply cycle 520, the exterior air can be equilibrated to be nearer to or at the temperature of the indoor environment.

FIG. 5B shows a simplified flow diagram for an exemplary method 510 according to an aspect of the present method 500.

The operation 512 may be directed to drawing interior air through the first air outlet into the honeycomb module.

The operation 514a and 516b may be directed to purifying the air that is drawn into the honeycomb module in the flow-through honeycomb molecular filter.

The operation 516a and 514b may be directed to equilibrating the temperature of the air that is drawn into the honeycomb module to be nearer or at the temperature of the heat recovery honeycomb of the honeycomb module.

The operation 518 may be directed to expelling purified and temperature-equilibrated air through the second air outlet.

With reference to FIG. 5C, there is described the air supply cycle 520. The air supply cycle 520 may commence with a step 522 of drawing exterior air through the second air outlet into the honeycomb module. The step 522 may include that the blower is activated to generate an air flow. In the air supply cycle 520, the air flow may be in a direction from the second air outlet to the first air outlet. The exterior air passing through the second air outlet may pass the blower and/or the particulate filter, before reaching the honeycomb module.

In the honeycomb module, there are two alternative method steps for proceeding, depending on whether the flow-through honeycomb molecular filter is closer to the second air outlet than the heat recovery honeycomb (as shown in, e.g., FIG. 3) or whether the heat recovery honeycomb is positioned closer to second air outlet than the flow-through honeycomb molecular filter (as shown in, e.g., FIG. 2).

The first alternative is detailed in subsequent method steps 524a and 526a. Step 524a is similar to the previously discussed step 514a and shall not be further discussed. Method step 526a is the same or similar to previously discussed method step 516a, except for the following: In a colder outdoor environment (e.g., in winter), in the air supply cycle 520, the heat recovery honeycomb would be warmer than the exterior air and would therefore warm up the air that is drawn into the honeycomb module. In contrast, in a warmer outdoor environment (e.g., in summer), in the air supply cycle 520, the heat recovery honeycomb would be colder than the exterior air and would therefore cool down the air that is drawn into the honeycomb module.

For the second alternative, the two corresponding method steps would be steps 524b and 526b, which would correspond to an initial temperature-equilibration (corresponding to step 526a of the first alternative) followed by purification (corresponding to step 524a of the first alternative). The description of the step is, apart from its order, substantially the same as that described in the first alternative and shall not be re-iterated for brevity.

After the air is purified and temperature-equilibrated (independent of their order), the air is blown into the indoor environment through the first air outlet.

FIG. 5C shows a simplified flow diagram for an exemplary method 520 according to an aspect of the present method 500.

The operation 522 may be directed to drawing exterior air through the second air outlet into the honeycomb module.

The operation 524a and 526b may be directed to purifying the air that is drawn into the honeycomb module in the flow-through honeycomb molecular filter.

The operation 526a and 524b may be directed to equilibrating the temperature of the air that is drawn into the honeycomb module to be nearer to or at the temperature of the heat recovery honeycomb of the honeycomb module.

The operation 528 may be directed to expelling purified and temperature-equilibrated air through the first air outlet.

The method 500 may further include a step 505 of activating the decentralized ventilation system. The activation may be carried out by different methods. For example, the decentralized ventilation system may be carried out manually, e.g., by pressing a switch, wherein the switch may be included in the decentralized ventilation system. The activation may be carried out via remote controller, wherein the remote controller may be associated with the decentralized ventilation system. The activation may be carried out via Wifi, wherein the Wifi may also control other decentralized ventilation systems within the building and coordinate the performance of all of the decentralized ventilation systems to be harmonized. The activation may be carried out via motion detector, wherein the motion detector may be included in the decentralized ventilation system. The activation may be carried out via timer, wherein the timer may be included in the decentralized ventilation system. The activation may be carried out via oxygen sensor, wherein the oxygen sensor may be included in the decentralized ventilation system. The activation may be carried out via carbon dioxide sensor, wherein the carbon dioxide sensor may be included in the decentralized ventilation system. Alternatively, the activation may be carried out via a combination of some or all of the above. Most of the activation methods as described above may assist in further decreasing the consumption of energy consumed by the decentralized ventilation system. For example, activation via motion detector assists in activation of the decentralized ventilation system only when someone is in the room. Activation via timer assists in activation of the decentralized ventilation system only when the room is supposed to be occupied (e.g., during office hours). Activation via oxygen sensor assists in activation of the decentralized ventilation system only when the oxygen level drops below a predetermined threshold. Activation via carbon dioxide sensor assists in activation of the decentralized ventilation system only when the carbon dioxide level is raised above a predetermined threshold.

In a third aspect, there is provided a use 800 of a honeycomb module in a decentralized ventilation system. The honeycomb module may include a flow-through honeycomb molecular filter and a heat recovery honeycomb, which may have properties as described hereinbefore. The use 800 may include using means for generating an air flow through the honeycomb module, such as a blower or an aspirator. The use 800 may include using means for channeling the air flow through the honeycomb module, such as a first air outlet and a second air outlet. The use 800 may include operation of the decentralized ventilation system, for example, by generating the air flow in alternating directions through the honeycomb module. In particular, the use 800 may include an alternating cycling between an air exhaust cycle and an air supply cycle, as described hereinbefore.

The use 800 may include regenerating (e.g., thermally regenerating) the flow-through honeycomb molecular filter. Regenerating the flow-through honeycomb molecular filter may involve removing the flow-through honeycomb molecular filter from the decentralized ventilation system. Regenerating the flow-through honeycomb molecular filter may further involve heating the flow-through honeycomb molecular filter to a temperature, wherein the temperature is optionally between about 150 °C and about 200 °C. Advantageously, regenerating the flow-through honeycomb molecular filter may assist the user in retaining the flow-through honeycomb molecular filter for a long period, which is associated with environmental and economic benefits.

Embodiments described in the context of a decentralized ventilation system are analogously valid for the use of a honeycomb module including a flow-through honeycomb molecular filter and a heat recovery honeycomb in a decentralized ventilation system and a method of using the decentralized ventilation system.

The term "comprising" shall be understood to have a broad meaning similar to the term "including" and will be understood to imply the inclusion of a stated integer or operation or group of integers or operations but not the exclusion of any other integer or operation or group of integers or operations. This definition also applies to variations on the term "comprising" such as "comprise" and "comprises".

By "about" in relation to a given numerical value, such as for percentage and size, it is meant to include numerical values within 10 % of the specified value.

### Example

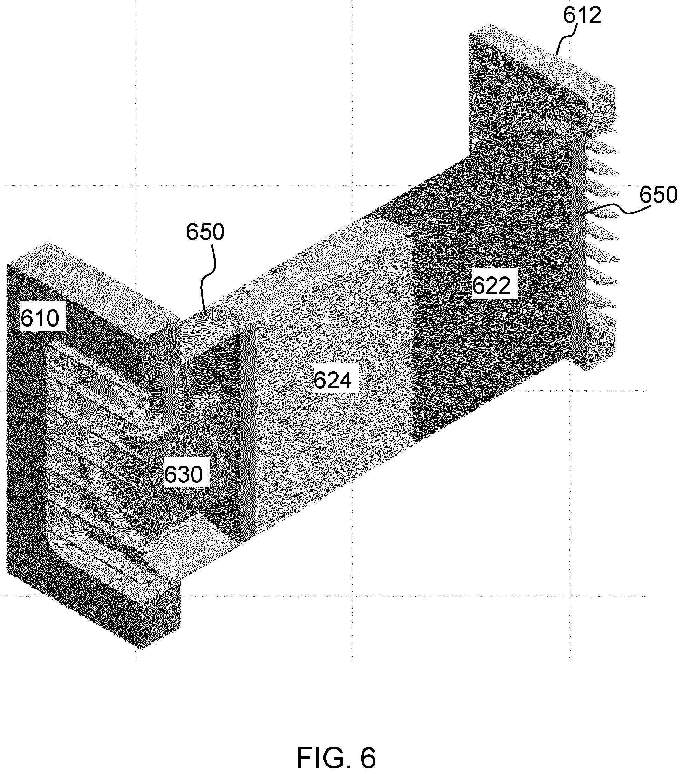

In one example, as shown in FIG. 6, there is exemplified a decentralized ventilation system 600 according to various embodiments of the present invention. The decentralized ventilation system 600 has a first air outlet 610, and a second air outlet 612, between which are disposed (from left to right) a blower 630, a (first) particulate filter 650, a heat recovery honeycomb 624, a flow-through honeycomb molecular filter 622, and a (second) particulate filter 650.

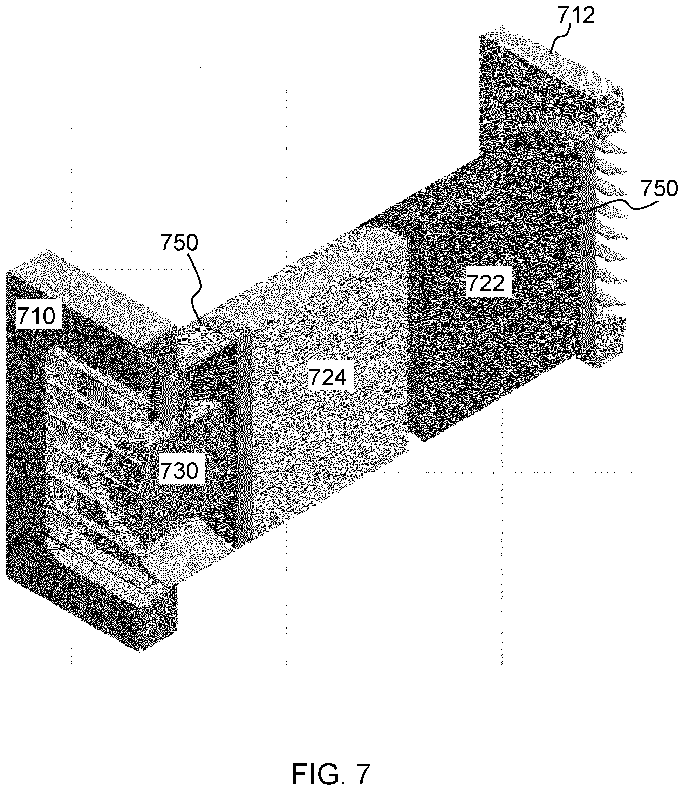

With reference to FIG. 7, there is exemplified a decentralized ventilation system 700 which shows essentially the same elements as decentralized ventilation system 600, which include a first air outlet 710, and a second air outlet 712, between which are disposed (from left to right) a blower 730, a (first) particulate filter 750, a heat recovery honeycomb 724, a flow-through honeycomb molecular filter 722, and a (second) particulate filter 750. However, the difference to the example shown in FIG. 6 lies in a schematic separation between the heat recovery honeycomb 724 and the flow-through honeycomb molecular filter 722. This schematic separation indicates that they are individual components, sequentially arranged in the decentralized ventilation system 700.

While the present invention has been particularly shown and described with reference to specific aspects, it should be understood by those skilled in the art that various changes in form and detail may be made therein without departing from the scope of the present invention as defined by the appended claims.

## Claims

1. A decentralized ventilation system (100) comprising:
a first air outlet (110) configured for facing an interior air of a building and a second air outlet (112) configured for facing an exterior air of the building; and
a blower (130) configured to generate an air flow (140) having alternating directions between the first air outlet (110) and the second air outlet (112) and a heat recovery honeycomb (124) disposed between the first air outlet (110) and the second air outlet (112),
**characterized in that** the decentralized ventilation system (100) further comprises:
a honeycomb module (120), wherein the honeycomb module comprises a flow-through honeycomb molecular filter (122) and the heat recovery honeycomb (124) disposed in series between the first air outlet (110) and the second air outlet (112).

2. The decentralized ventilation system (100) of claim 1, wherein the flow-through honeycomb molecular filter (122) comprises activated carbon.

3. The decentralized ventilation system (100) of claim 1 or claim 2, wherein the flow-through honeycomb molecular filter (122) comprises a homogenous composition of activated carbon and a support material.

4. The decentralized ventilation system (100) of claim 1 or claim 2, wherein the flow-through honeycomb molecular filter (122) comprises a support material coated with activated carbon.

5. The decentralized ventilation system (100) of any of the preceding claims, wherein the flow-through honeycomb molecular filter (122) is impregnated.

6. The decentralized ventilation system (100) of any of the preceding claims, wherein the flow-through honeycomb molecular filter (122) is formed monolithically.

7. The decentralized ventilation system (100, 200) of any of the preceding claims, wherein the flow-through honeycomb molecular filter (122, 222) is closer to the first air outlet (110, 210) than the heat recovery honeycomb (124, 214).

8. The decentralized ventilation system (100, 300) of any of the preceding claims 1 to 6, wherein the heat recovery honeycomb (124, 324) is closer to the first air outlet (110, 310) than the flow-through honeycomb molecular filter (122, 322).

9. The decentralized ventilation system (100, 200, 300, 400) of any of the preceding claims, further comprising a particulate filter (450) positioned between the blower (130, 430) and the honeycomb module (120, 420); and/or positioned between the honeycomb module (120, 420) and the second air outlet (112, 412).

10. A method (500) of using the decentralized ventilation system of any of preceding claims 1 to 9, the method comprising an alternating cycling between an air exhaust cycle (510) and an air supply cycle (520).

11. The method (500) of claim 10, wherein the air exhaust cycle (510) comprises the following steps:
(i) drawing interior air through the first air outlet into the honeycomb module (512);
(ii) purifying the air that is drawn into the honeycomb module in the flow-through honeycomb molecular filter (514a, 516b);
(iii) equilibrating a temperature of the air that is drawn into the honeycomb module to be nearer or at a temperature of the heat recovery honeycomb of the honeycomb module (516a, 514b);
and
(iv) expelling purified and temperature-equilibrated air through the second air outlet (518);
wherein steps (ii) and (iii) are interchangeable.

12. The method (500) of claim 10 or claim 11, wherein the air supply cycle (520) comprises the following steps:
(i) drawing exterior air through the second air outlet into the honeycomb module (522);
(ii) purifying the air that is drawn into the honeycomb module in the flow-through honeycomb molecular filter (524a, 526b);
(iii) equilibrating a temperature of the air that is drawn into the honeycomb module to be nearer or at a temperature of the heat recovery honeycomb of the honeycomb module (526a, 524b);
and
(iv) expelling purified and temperature-equilibrated air through the first air outlet (528);
wherein steps (ii) and (iii) are interchangeable.

13. The method (500) of any one of claims 10 to 12, wherein the method (500) comprises a step of:
activating the decentralized ventilation system, wherein the activation is carried out manually, via remote controller, via Wifi, via motion detector, via timer, via oxygen sensor, via carbon dioxide sensor, or a combination thereof (505).

14. Use (800) of a honeycomb module comprising a flow-through honeycomb molecular filter and a heat recovery honeycomb in a decentralized ventilation system.

15. The use (800) of claim 14, further comprising thermally regenerating the flow-through honeycomb molecular filter by removing the flow-through honeycomb molecular filter from the decentralized ventilation system and heating the flow-through honeycomb molecular filter.

## Patentansprüche

1. Dezentrale Lüftungsanlage (100), umfassend:
einen ersten Luftauslass (110), der so konfiguriert ist, dass er der Innenluft eines Gebäudes zugewandt ist, und einen zweiten Luftauslass (112), der so konfiguriert ist, dass er der Außenluft des Gebäudes zugewandt ist; und
ein Gebläse (130), das so konfiguriert ist, dass es einen Luftstrom (140) mit wechselnden Richtungen zwischen dem ersten Luftauslass (110) und dem zweiten Luftauslass (112) erzeugt, und eine Wärmerückgewinnungswabe (124), die zwischen dem ersten Luftauslass (110) und dem zweiten Luftauslass (112) angeordnet ist,
**dadurch gekennzeichnet, dass** die dezentrale Lüftungsanlage (100) ferner umfasst:
ein Wabenmodul (120), wobei das Wabenmodul einen Durchfluss-Wabenmolekularfilter (122) umfasst und die
Wärmerückgewinnungswabe (124), die in Reihe zwischen dem ersten Luftauslass (110) und dem zweiten Luftauslass (112) angeordnet ist.

2. Dezentrale Lüftungsanlage (100) nach Anspruch 1, wobei der Durchfluss-Wabenmolekularfilter (122) Aktivkohle umfasst.

3. Dezentrale Lüftungsanlage (100) nach Anspruch 1 oder Anspruch 2, wobei der Durchfluss-Wabenmolekularfilter (122) eine homogene Zusammensetzung aus Aktivkohle und einem Trägermaterial umfasst.

4. Dezentrale Lüftungsanlage (100) nach Anspruch 1 oder Anspruch 2, wobei der Durchfluss-Wabenmolekularfilter (122) ein mit Aktivkohle beschichtetes Trägermaterial umfasst.

5. Dezentrale Lüftungsanlage (100) nach einem der obigen Ansprüche, wobei der Durchfluss-Wabenmolekularfilter (122) imprägniert ist.

6. Dezentrale Lüftungsanlage (100) nach einem der obigen Ansprüche, wobei der Durchfluss-Wabenmolekularfilter (122) monolithisch ausgebildet ist.

7. Dezentrale Lüftungsanlage (100, 200) nach einem der obigen Ansprüche, wobei der Durchfluss-Wabenmolekularfilter (122, 222) näher am ersten Luftauslass (110, 210) liegt als die Wärmerückgewinnungswabe (124, 214).

8. Dezentrale Lüftungsanlage (100, 300) nach einem der obigen Ansprüche 1 bis 6, wobei die Wärmerückgewinnungswabe (124, 324) näher am ersten Luftauslass (110, 310) liegt als der Durchfluss-Wabenmolekularfilter (122, 322).

9. Dezentrale Lüftungsanlage (100, 200, 300, 400) nach einem der obigen Ansprüche, die ferner einen zwischen dem Gebläse (130, 430) und dem Wabenmodul (120, 420); und/oder zwischen dem Wabenmodul (120, 420) und dem zweiten Luftauslass (112, 412) angeordneten Partikelfilter (450) umfasst.

10. Verfahren (500) zur Verwendung der dezentralen Lüftungsanlage nach einem der obigen Ansprüche 1 bis 9, wobei das Verfahren einen alternierenden Zyklus zwischen einem Abluftzyklus (510) und einem Zuluftzyklus (520) umfasst.

11. Verfahren (500) nach Anspruch 10, wobei der Abluftzyklus (510) die folgenden Schritte umfasst:
(i) Ansaugen von Innenluft durch den ersten Luftauslass in das Wabenmodul (512);
(ii) Reinigen der in das Wabenmodul angesaugten Luft im Durchfluss-Wabenmolekularfilter (514a, 516b);
(iii) Ausgleichen der Temperatur der in das Wabenmodul angesaugten Luft, um sie näher an die Temperatur der Wärmerückgewinnungswabe des Wabenmoduls (516a, 514b) heranzuführen oder auf diese Temperatur zu bringen; und
(iv) Ausstoßen der gereinigten und temperaturangeglichenen Luft durch den zweiten Luftauslass (518); wobei die Schritte (ii) und (iii) austauschbar sind.

12. Verfahren (500) nach Anspruch 10 oder Anspruch 11, wobei der Zuluftzyklus (520) die folgenden Schritte umfasst:
(i) Ansaugen von Außenluft durch den zweiten Luftauslass in das Wabenmodul (522);
(ii) Reinigen der in das Wabenmodul angesaugten Luft im Durchfluss-Wabenmolekularfilter (524a, 526b);
(iii) Ausgleichen der Temperatur der in das Wabenmodul angesaugten Luft, um sie näher an die Temperatur der Wärmerückgewinnungswabe des Wabenmoduls (526a, 524b) heranzuführen oder auf diese Temperatur zu bringen; und
(iv) Ausstoßen der gereinigten und temperaturangeglichenen Luft durch den ersten Luftauslass (528); wobei die Schritte (ii) und (iii) austauschbar sind.

13. Verfahren (500) nach einem der Ansprüche 10 bis 12, wobei das Verfahren (500) folgenden Schritt umfasst:
Aktivieren der dezentralen Lüftungsanlage, wobei die Aktivierung manuell, über eine Fernbedienung, über Wi-Fi, über einen Bewegungsmelder, über eine Zeitschaltuhr, über einen Sauerstoffsensor, über einen Kohlendioxidsensor oder eine Kombination davon erfolgt (505).

14. Verwendung (800) eines Wabenmoduls, das einen Durchfluss-Wabenmolekularfilter und eine Wärmerückgewinnungswabe in einer dezentralen Lüftungsanlage umfasst.

15. Verwendung (800) nach Anspruch 14, die ferner das thermische Regenerieren des Durchfluss-Wabenmolekularfilters durch Entfernen des Durchfluss-Wabenmolekularfilters aus der dezentralen Lüftungsanlage und Erwärmen des Durchfluss-Wabenmolekularfilters umfasst.

## Revendications

1. Système de ventilation décentralisé (100) comprenant:
une première sortie d'air (110) configurée pour faire face à l'air intérieur d'un bâtiment et une deuxième sortie d'air (112) configurée pour faire face à l'air extérieur du bâtiment; et
un ventilateur (130) configuré pour générer un flux d'air (140) ayant des directions alternées entre la première sortie d'air (110) et la deuxième sortie d'air (112) et un nid d'abeilles à récupération de chaleur (124) disposé entre la première sortie d'air (110) et la deuxième sortie d'air (112),
**caractérisé en ce que** le système de ventilation décentralisé (100) comprend en outre:
un module en nid d'abeilles (120), dans lequel le module en nid d'abeilles comprend un filtre moléculaire en nid d'abeilles à écoulement continu (122) et le
nid d'abeilles à récupération de chaleur (124) étant disposé en série entre la première sortie d'air (110) et la deuxième sortie d'air (112).

2. Système de ventilation décentralisé (100) selon la revendication 1, dans lequel le filtre moléculaire en nid d'abeilles à flux continu (122) comprend du charbon actif.

3. Système de ventilation décentralisé (100) selon la revendication 1 ou la revendication 2, dans lequel le filtre moléculaire en nid d'abeilles à flux continu (122) comprend une composition homogène de charbon actif et d'un matériau de base.

4. Système de ventilation décentralisé (100) selon la revendication 1 ou la revendication 2, dans lequel le filtre moléculaire en nid d'abeilles à flux continu (122) comprend un matériau de base revêtu de charbon actif.

5. Système de ventilation décentralisé (100) selon l'une quelconque des revendications précédentes, dans lequel le filtre moléculaire en nid d'abeilles à écoulement continu (122) est imprégné.

6. Système de ventilation décentralisé (100) selon l'une quelconque des revendications précédentes, dans lequel le filtre moléculaire en nid d'abeilles à écoulement continu (122) est réalisé de manière monolithique.

7. Système de ventilation décentralisé (100, 200) selon l'une quelconque des revendications précédentes, dans lequel le filtre moléculaire en nid d'abeilles à écoulement continu (122, 222) est plus proche de la première sortie d'air (110, 210) que le nid d'abeilles à récupération de chaleur (124, 214).

8. Système de ventilation décentralisé (100, 300) selon l'une quelconque des revendications 1 à 6 précédentes, dans lequel le nid d'abeilles à récupération de chaleur (124, 324) est plus proche de la première sortie d'air (110, 310) que le filtre moléculaire en nid d'abeilles à écoulement continu (122, 322).

9. Système de ventilation décentralisé (100, 200, 300, 400) selon l'une quelconque des revendications précédentes, comprenant en outre un filtre à particules (450) positionné entre le ventilateur (130, 430) et le module en nid d'abeilles (120, 420); et/ou positionné entre le module en nid d'abeilles (120, 420) et la deuxième sortie d'air (112, 412).

10. Procédé (500) d'utilisation du système de ventilation décentralisé selon l'une quelconque des revendications 1 à 9 précédentes, le procédé comprenant une alternance entre un cycle d'évacuation d'air (510) et un cycle d'alimentation en air (520).

11. Procédé (500) selon la revendication 10, dans lequel le cycle d'évacuation d'air (510) comprend les étapes suivantes:
(i) aspirer l'air intérieur à travers la première sortie d'air dans le module en nid d'abeilles (512);
(ii) purifier l'air aspiré dans le module en nid d'abeilles dans le filtre moléculaire en nid d'abeilles à écoulement continu (514a, 516b);
(iii) équilibrer la température de l'air aspiré dans le module en nid d'abeilles pour qu'elle soit plus proche ou égale à la température du nid d'abeilles à récupération de chaleur du module en nid d'abeilles (516a, 514b); et
(iv) expulser l'air purifié et à température équilibrée par la deuxième sortie d'air (518); dans lequel les étapes (ii) et (iii) sont interchangeables.

12. Procédé (500) selon la revendication 10 ou la revendication 11, dans lequel le cycle d'alimentation en air (520) comprend les étapes suivantes:
(i) aspirer l'air extérieur à travers la deuxième sortie d'air dans le module en nid d'abeilles (522);
(ii) purifier l'air aspiré dans le module en nid d'abeilles dans le filtre moléculaire en nid d'abeilles à écoulement continu (524a, 526b);
(iii) équilibrer la température de l'air aspiré dans le module en nid d'abeilles pour qu'elle soit plus proche ou égale à la température du nid d'abeilles à récupération de chaleur du module en nid d'abeilles (526a, 524b); et
(iv) expulser l'air purifié et à température équilibrée par la première sortie d'air (528); dans lequel les étapes (ii) et (iii) sont interchangeables.

13. Procédé (500) selon l'une quelconque des revendications 10 à 12, dans lequel le procédé (500) comprend une étape consistant à:
activer le système de ventilation décentralisé, l'activation étant effectuée manuellement, via une télécommande, via Wi-Fi, via un détecteur de mouvement, via une minuterie, via un capteur d'oxygène, via un capteur de dioxyde de carbone, ou une combinaison de ceux-ci (505).

14. Utilisation (800) d'un module en nid d'abeilles comprenant un filtre moléculaire en nid d'abeilles à écoulement continu et un nid d'abeilles à récupération de chaleur dans un système de ventilation décentralisé.

15. Utilisation (800) selon la revendication 14, comprenant en outre la régénération thermique du filtre moléculaire en nid d'abeilles à écoulement continu en retirant le filtre moléculaire en nid d'abeilles à écoulement continu du système de ventilation décentralisé et en chauffant le filtre moléculaire en nid d'abeilles à écoulement continu.
